# FASCICULE DE BREVET EUROPEEN

(11) **EP 2 942 556 B1**
(45) Date de publication et mention de la délivrance du brevet: **04.09.2019**
(21) Numéro de dépôt: 15153756.0
(22) Date de dépôt: 04.02.2015
(51) Int. Cl.: F17C 3/04, F17C 1/14, F17C 1/16, F17C 1/06, F17C 13/08, F17C 1/12

(54) **Réservoir de stockage de fluide cryogénique et semi-remorque comportant un tel réservoir**
Speichertank für kryogene Flüssigkeit, und Sattelauflieger, der einen solchen Speichertank umfasst
Storage tank for a cryogenic fluid and trailer comprising such a tank

(30) Priorité: 20.03.2014 FR 1452324
(43) Date de publication de la demande: 11.11.2015
(73) Titulaire: Cryolor, 57365 Ennery (FR)
(72) Inventeur: Varrassi, Lucien, 57890 Porcelette (FR)
(74) Mandataire: De Cuenca, Emmanuel Jaime

(56) Documents cités:
- WO-A1-2005/085099
- WO-A1-2012/016171
- DE-A1- 3 103 646
- DE-A1-102010 024 212
- DE-C- 976 773
- US-A- 2 809 762
- US-A- 3 207 352
- US-A1- 2010 276 434
- US-B1- 6 189 723
- US-B1- 8 297 468

## Description

La présente invention concerne un réservoir de stockage pour le transport de fluide cryogénique.

L'invention concerne plus particulièrement un réservoir de stockage pour le transport d'un fluide cryogénique, notamment du dioxyde de carbone liquéfié, le réservoir étant dépourvu d'isolation sous vide et comprenant une paroi délimitant un volume de stockage pour du fluide, ladite paroi comprend une structure multicouche

Le transport de grandes quantités de fluides tel que le dioxyde de carbone utilise généralement des véhicules de type semi-remorque comprenant un réservoir cryogénique à simple paroi (c'est-à-dire sans double paroi et un vide au niveau de l'inter-paroi).

Le réservoir est isolé thermiquement et stocke le fluide à une pression par exemple comprise entre 18bar et 25bar et une température comprise entre -10°C et -100°C.

Pour des questions de compatibilité chimique, de résistance mécanique et au froid, le réservoir de stockage est classiquement constitué d'acier au carbone à grains fin, résilient (résistant) à une température de -50°C et muni d'une isolation externe.

L'épaisseur de la paroi d'acier d'un tel réservoir est généralement d'environ 10mm pour une masse totale du véhicule de huit à dix tonnes.

L'isolation est assurée généralement via une couche d'isolation en polyuréthane d'une épaisseur de 150mm.

Un tel réservoir est cependant coûteux et a une masse relativement importante. D'autres structures connues, présentent d'autres problèmes techniques : incompatibilité avec un liquide cryogénique, étanchéité insuffisante, comme mécanique insuffisante, isolation thermique insuffisante...

Les documents US20100276434A, US3207352, US2809762 et US8297468 décrivent des réservoirs de gaz sous pression non cryogéniques. Un but de la présente invention est de pallier tout ou partie des inconvénients de l'art antérieur relevés ci-dessus.

A cette fin, le réservoir selon l'invention, par ailleurs conforme à la définition générique qu'en donne le préambule ci-dessus et à la revendication 1, est essentiellement caractérisé en ce que la structure multicouche de la paroi comprend, de l'intérieur du réservoir vers l'extérieur du réservoir :
- une première couche étanche comprenant l'un parmi : une résine renforcée par des fibres de verre et/ou des fibres de carbone, un polymère tel que du polyuréthane, de l'aluminium, de l'acier, de l'inox,
- une seconde couche comprenant une épaisseur de matériau stratifié à base de fibres de carbones et/ou de fibres de verre,
- une troisième couche comprenant une épaisseur d'isolation thermique,
- une quatrième couche comprenant une épaisseur de matériau stratifié à base de fibres de carbones et/ou de fibres de verre,
la première couche ayant une épaisseur comprise entre 0,1mm et 6mm, la seconde couche ayant une épaisseur comprise entre 5 et 40 mm, la troisième couche ayant une épaisseur comprise entre 20 et 200 mm, la quatrième couche ayant une épaisseur comprise entre 2 et 20 mm, et en ce que
- la troisième couche comprend au moins l'un parmi : du polystyrène expansé (PSE), du polystyrène extrudé (PSX), du polyuréthane (PUR), de la laine minérale, de la laine animale, des fibres de bois, des fibres de chanvre, de la laine de coton, du lin, de la laine de mouton, des plumes de canard, de l'ouate de cellulose, du liège expansé, de la perlite, du vermiculite expansé, du verre cellulaire, au moins un panneau isolant sous vide, le au moins un panneau étant constitués d'un aérogel enveloppé dans un film étanche mis sous vide, l'aérogel pouvant être du type "silice nanostructurée", une mousse de polyuréthane (isolant divulgué dans D4) notamment une mousse isolante du type polyuréthane, du bois balsa, une couche comprenant une âme sandwich.

De préférence, la paroi comprend une structure multicouche, ladite structure multicouche étant constituée desdites quatre couches empilées les unes sur les autres dans cet ordre de l'intérieur vers l'extérieur du réservoir.

Par ailleurs, des modes de réalisation de l'invention peuvent comporter l'une ou plusieurs des caractéristiques suivantes :
- au moins l'une parmi : la seconde couche et la quatrième couche, comprend des fibres de carbone ou des fibres de verre stratifiées au moyen d'une résine de type époxy ou polyamide,
- la première couche a une épaisseur comprise entre 0,5mm et 5mm, la seconde couche a une épaisseur comprise entre dix et trente millimètres, la troisième couche a une épaisseur comprise entre quarante et cent-cinquante millimètres, la quatrième couche a une épaisseur comprise entre quatre et quinze millimètres,
- la première couche a une épaisseur comprise entre un et quatre millimètre, la seconde couche a une épaisseur comprise entre quinze et vingt-cinq millimètres, la troisième couche a une épaisseur comprise entre quarante et cent-cinquante millimètres, la quatrième couche a une épaisseur comprise entre quatre et quinze millimètres,
- le réservoir a une forme générale cylindrique et comprend une pluralité de pieds supports qui s'étendent sur une partie de la circonférence du réservoir pour former des éléments de maintien et de fixation du réservoir en position horizontale,
- les pieds supports sont disposés autour de la paroi extérieure et un enroulement filamentaire est réalisé autour de la paroi extérieure munie des pieds supports,
- le réservoir comprend, dans le volume intérieur délimité par la paroi interne, au moins une cloison transversale à un axe longitudinal du réservoir, la au moins une cloison étant ajourée pour à la fois autoriser un flot de liquide dans le réservoir selon une direction parallèle à l'axe longitudinal et former un brise-flot,
- la au moins une cloison transversale est constitué du même matériau que la première couche,
- la au moins une cloison transversale est fixée sur un tronçon tubulaire formant une partie centrale de la paroi du réservoir,
- la au moins une cloison transversale est montée serrée entre deux tronçons tubulaires assemblés l'un à l'autre pour former une partie centrale de la paroi du réservoir,
- les deux extrémités de la partie centrale du réservoir sont refermées par des parois de fond fixées aux extrémités de la partie centrale de la paroi (3) du réservoir,
- la paroi comporte au moins un élément de renfort mécanique disposé sur sa surface extérieure au niveau de l'emplacement de la au moins une cloison transversale,
- un enroulement de fibre de renfort est enroulée sur la partie centrale et les parois de fond assemblés aux deux extrémités de la partie centrale.

L'invention concerne également un semi-remorque comprenant un réservoir selon l'une quelconque des caractéristiques ci-dessus ou ci-dessous.

L'invention peut concerner également tout dispositif ou procédé alternatif comprenant toute combinaison des caractéristiques ci-dessus ou ci-dessous, dans le cadre des revendications.

D'autres particularités et avantages apparaîtront à la lecture de la description ci-après, faite en référence aux figures dans lesquelles :
- la figure 1 représente une vue de côté, schématique et partielle, illustrant un réservoir mobile sur un véhicule de type semi-remorque,
- la figure 2, représente une vue de côté, en coupe verticale schématique et partielle, illustrant un exemple de structure de la paroi d'un mode de réalisation de réservoir selon l'invention,
- la figure 3 représente une vue en coupe transversale, schématique et partielle, illustrant un exemple de structure de réservoir d'un mode de réalisation possible selon l'invention,
- la figure 4 représente une vue en perspective, schématique et partielle, illustrant un exemple de structure de réservoir selon un mode de réalisation possible de l'invention,
- les figures 5 et 6 illustrent des vues éclatées, de côté et en coupe, illustrant respectivement deux exemples possibles de structures de réservoir selon l'invention.

L'invention concerne un réservoir de stockage pour le transport de fluide cryogénique et plus précisément un réservoir apte à stocker du CO2 sous forme d'un mélange de liquide et de gaz à des températures basses par exemple comprises entre -10°C et -100°C et à une pression comprise entre 18bar et 25bar.

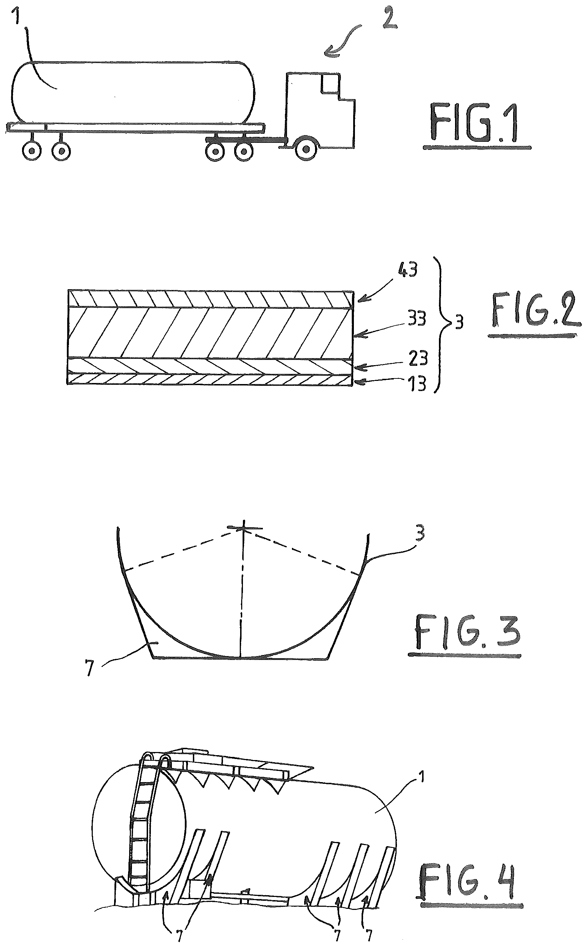

Comme illustré à la figure 1, et sans que ceci soit limitatif, un tel réservoir 1 (ou citerne) peut être monté de façon amovible ou non sur la remorque d'un véhicule 2 tel qu'un camion.

Selon l'invention, la structure du réservoir est modifiée par rapport à l'art antérieur par l'utilisation d'une structure composite particulière.

Le CO2 liquéfié ne pose aucun problème de compatibilité chimique avec les matériaux décrits ci-dessus ou ci-après.

C'est-à-dire que, au lieu d'une cloison en acier au carbone à grains fins utilisée classiquement, il est possible d'utiliser un réservoir comprenant une surface interne de revêtement de type gel (« gel coat »). Par exemple, une épaisseur de résine de l'ordre de 1 mm peut être prévue et sur laquelle est stratifiée une première peau (construction composite classique). Ceci permet d'obtenir une surface lisse et d'assurer un minimum d'étanchéité au liquide sous pression.

Comme illustré à la figure 2, la paroi 3 du réservoir 1 comprend de préférence une structure multicouche comprenant, de l'intérieur du réservoir vers l'extérieur du réservoir :
- une première couche 13 étanche métallique constituée de préférence d'aluminium, d'acier ou d'inox,
- une seconde couche 23 comprenant une épaisseur de matériau stratifié à base de fibres de carbones et/ou de fibres de verre,
- une troisième couche 33 comprenant une épaisseur d'isolation thermique,
- une quatrième couche 43 comprenant une épaisseur de matériau stratifié à base de fibres de carbones et/ou de fibres de verre.

Par exemple, l'une parmi : la seconde couche 23 et la quatrième couche 43, comprend des fibres de carbone ou des fibres de verre stratifiées au moyen d'une résine de type époxy ou polyamide.

La troisième couche 33 forme une isolation thermique et comprend de préférence au moins l'un parmi : du polystyrène expansé (PSE), du polystyrène extrudé (PSX), du polyuréthane (PUR), de la laine minérale, de la laine animale, des fibres de bois, des fibres de chanvre, de la laine de coton, du lin, de la laine de mouton, des plumes de canard, de l'ouate de cellulose, du liège expansé, de la perlite, du vermiculite expansé, du verre cellulaire, au moins un panneau isolant sous vide, le au moins un panneau étant constitués d'un aérogel enveloppé dans un film étanche mis sous vide, l'aérogel pouvant être du type "silice nanostructurée", une mousse de polyuréthane notamment une mousse isolante du type polyuréthane, du bois balsa, une couche comprenant une âme sandwich.

La première couche 13 a de préférence une épaisseur comprise entre 0,1mm et 6mm, et plus préférentiellement comprise entre 0,5mm et 5mm, par exemple 1mm ou 4mm ou entre 1 et 3mm, par exemple 1mm ou 3mm.

La seconde couche 23 a une épaisseur comprise de préférence entre 5 et 60 mm ou entre 5 et 40 mm et plus préférentiellement comprise entre dix et trente millimètres, par exemple entre quinze et vingt-cinq millimètres, et notamment vingt millimètres.

La troisième couche 33 a par exemple une épaisseur comprise entre 20 et 300 mm, de préférence comprise entre 20 et 200 mm, par exemple 20 mm ou entre quarante et cent cinquante millimètres.

La quatrième couche 43 a de préférence une épaisseur comprise entre deux et trente millimètres et plus préférentiellement comprise entre quatre et 20 mm, par exemple 20 mm ou entre quatre et quinze millimètres.

Cette structure composite de la paroi 3 constitutive du réservoir 1 permet une isolation thermique satisfaisante, une bonne étanchéité de tout en garantissant une bonne résistance mécanique à l'ensemble. Cette structure possède une bonne compatibilité chimique avec du CO2 et une masse relativement basse.

Cette structure multicouche permet de conférer à l'ensemble une raideur déterminée et une résistance au flambage et aux efforts dynamiques.

De préférence, le volume intérieur délimité par les parois 3 comprend des cloisons 8 transversales ajourées en leur centre pour former des brises flots (ouvertures centrales de diamètre de l'ordre de 100mm à 800mm par exemple).

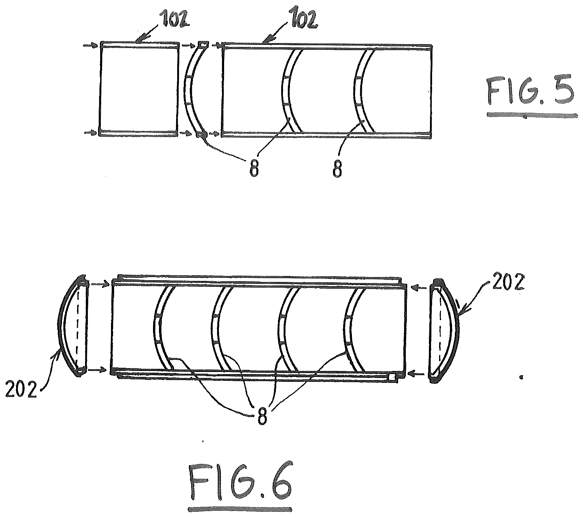

Comme illustré à la figure 5, cette cloison 3 peut être constituée de plusieurs tronçons cylindriques 102 assemblés en série, les cloisons 8 transversales ajourées formant des brises flots étant intercalées et encastrés entre deux tronçons cylindriques 102 adjacents.

Une fois cette partie centrale cylindrique assemblée, celle-ci peut être enroulée de matériau composite de renforcement. Après enroulement, cette partie cylindrique peut être refermée à ses extrémités par des fonds 202 respectifs par exemple pré-moulés et recouverts également de cette couche (les fonds ont la même structure multicouches que la partie cylindrique centrale, cf. figure 6). Les fonds 202 peuvent être assemblés à la partie centrale via un enroulement local supplémentaire de cette deuxième couche (résine + fibres). Cet enroulement local complémentaire circonférentiel de recouvrement peut être sur une zone longitudinale de 100 à 200 mm de large par exemple.

Selon un autre mode de réalisation possible, les deux fonds 202 thermoformés sont du même matériau que la paroi 3 de la partie centrale et l'enroulement est réalisé sur l'ensemble (partie centrale + fonds 202). Cet enroulement ne peut en principe pas être réalisé jusqu'à l'axe de la structure (du fait de l'outil de maintien aux extrémités). Si besoin une finition par stratification manuelle peut être réalisée si nécessaire après enroulement jusqu'au au plus près de l'axe (jusqu'à un diamètre de 300 mm par exemple).

Le réservoir 1 est de préférence renforcé au niveau des portions comprenant les cloisons 8 transversales. Par exemple des renforts en bois balsa peuvent être prévus localement autour de la partie cylindrique afin de renforcer localement le réservoir 1 pour supporter les contraintes locales dynamiques qui se répercutent à l'interface (par exemple une masse de liquide en pression contre les brises-flots sous 2g de déplacement de liquide vers l'avant).

Dans le cas d'une première couche 13 en aluminium ou inox ou acier, un sous-ensemble comportant les cloisons 8 en aluminium (de l'épaisseur requise pour résister aux effets dynamiques du gaz liquéfié), la partie centrale cylindrique (virole) et les fonds 202 peuvent être réalisées par chaudronnerie. Cette épaisseur minimale peut être soudée par des procédés de soudage connus du type TIG ou MIG/MAG à condition d'utiliser des outils de maintien adaptés.

L'ensemble ainsi soudé peut ensuite être recouvert des autres couches 23, 33, 43 et éventuellement d'un enroulement filamentaire.

Les deux fonds 202 pré-moulés peuvent être assemblés et soudés à la partie centrale et l'ensemble peut être recouvert des autres couches par stratification d'assemblage.

Comme illustré aux figures 3 et 4, le réservoir 1 a de préférence une forme générale cylindrique et comprend une pluralité de pieds 7 supports qui s'étendent sur une partie de la circonférence du réservoir 1 pour former des éléments de maintien et de fixation du réservoir 1 en position horizontale.

Ces supports 7 sont disposés de préférence autour de la paroi 3 extérieure et un enroulement filamentaire peut être réalisé autour de la paroi 3 extérieure munie des pieds 7 supports. Ces supports 7 forment également des renforts structuraux.

Tout en étant adaptée (chimiquement, mécaniquement et thermiquement) à transporter du dioxyde de carbone, une telle structure de réservoir permet, de réduire significativement la masse et le coût du réservoir par rapport à l'art antérieur.

Ainsi, pour une citerne de semi-remorque ayant un volume d'environ 26000 litres, la masse du réservoir peut être approximée de la façon suivante :
- une première couche 13 (liner) en polyuréthane d'environ 200kg (environ 1 100kg dans le cas d'inox ou environ 400kg dans le cas d'aluminium),
- une seconde couche de 20mm d'épaisseur en matériau stratifié (carbone+résine) sur une surface de 70m² augmentée de 10% au niveau de renforts locaux (extrémité de la virole, fond plus épais que le reste...) peut être estimée à 2300kg,
- une troisième couche d'isolant ayant une épaisseur comprise entre 40 et 150mm, du bois balsa pour renforcer la structure au droit des berces peut être estimée à 700kg
- une quatrième couche de 4mm d'épaisseur en matériau stratifié (carbone+résine) d'environ ayant une masse d'environ 500kg,
- quatre parois 8 brise-flots de masse totale estimée à 200kg au total,
- sept berces et enroulements d'assemblage évalués à 200kg au total,

La masse totale du réservoir selon un mode de réalisation de l'invention peut être ainsi estimée à 4100kg environ.

La masse des réservoirs selon l'art antérieur à structure d'acier au carbone à grains fins est d'environ 8000kg. Ainsi, le gain massique par rapport au carbone peut être de l'ordre de 3900kg.

Autre ce gain massique considérable. La solution selon l'invention est également plus avantageuse en ce qui concerne son coût (économie réalisée par la diminution de la masse d'acier utilisée).

La première couche est constituée de préférence d'aluminium, d'inox ou acier au carbone à gains fin résilient à une température de -50°C.

## Revendications

1. Réservoir de stockage pour le transport d'un fluide cryogénique, notamment du dioxyde de carbone liquéfié, le réservoir (1) étant à simple paroi à structure multicouche, c'est à dire sans structure à double paroi et un vide entre les deux parois au niveau de l'inter-paroi, la paroi délimitant un volume de stockage pour du fluide, ladite paroi comprenant de l'intérieur du réservoir (1) vers l'extérieur du réservoir (1) :
- une première couche (13) métallique étanche notamment comprenant l'un parmi : de l'aluminium, de l'acier, de l'inox,
- une seconde couche (23) comprenant une épaisseur de matériau stratifié à base de fibres de carbones et/ou de fibres de verre,
- une troisième couche (33) comprenant une épaisseur d'isolation thermique,
- une quatrième couche, et
dans lequel la troisième couche (33) comprend au moins l'un parmi : du polystyrène expansé (PSE), du polystyrène extrudé (PSX), du polyuréthane (PUR), de la laine minérale, de la laine animale, des fibres de bois, des fibres de chanvre, de la laine de coton, du lin, de la laine de mouton, des plumes de canard, de l'ouate de cellulose, du liège expansé, de la perlite, du vermiculite expansé, du verre cellulaire, au moins un panneau isolant sous vide, le au moins un panneau étant constitués d'un aérogel enveloppé dans un film étanche mis sous vide, l'aérogel pouvant être du type "silice nanostructurée", une mousse de polyuréthane notamment une mousse isolante du type polyuréthane, du bois balsa, une couche comprenant une âme sandwich, **caractérisé en ce que** :
- la quatrième couche comprend une épaisseur de matériau stratifié à base de fibres de carbones et/ou de fibres de verre, et **en ce que**
- les couches ont les épaisseurs suivantes : la première couche a une épaisseur comprise entre 0,1mm et 6mm, la seconde couche a une épaisseur comprise entre 5 et 40 mm, la troisième couche a une épaisseur comprise entre 20 et 200 mm, la quatrième couche a une épaisseur comprise entre 2 et 20mm.

2. Réservoir selon la revendication 1, **caractérisé en ce que**, au moins l'une parmi : la seconde couche (13) et la quatrième couche (43), comprend des fibres de carbone ou des fibres de verre stratifiées au moyen d'une résine de type époxy ou polyamide.

3. Réservoir selon l'une quelconque des revendications 1 à 2, **caractérisé en ce que**, la première couche (13) a une épaisseur comprise entre 0,5mm et 5mm, la seconde couche (23) a une épaisseur comprise entre dix et trente millimètres, la troisième couche (33) a une épaisseur comprise entre quarante et cent-cinquante millimètres, la quatrième couche (43) a une épaisseur comprise entre quatre et quinze millimètres.

4. Réservoir selon l'une quelconque des revendications 1 à 3, **caractérisé en ce que**, la première couche (13) a une épaisseur comprise entre un et quatre millimètre, la seconde couche (23) a une épaisseur comprise entre quinze et vingt-cinq millimètres, la troisième couche (33) a une épaisseur comprise entre quarante et cent-cinquante millimètres, la quatrième couche (43) a une épaisseur comprise entre quatre et quinze millimètres.

5. Réservoir selon l'une quelconque des revendications 1 à 4, **caractérisé en ce que** le réservoir (1) a une forme générale cylindrique et comprend une pluralité de pieds (7) supports qui s'étendent sur une partie de la circonférence du réservoir (1) pour former des éléments de maintien et de fixation du réservoir (1) en position horizontale.

6. Réservoir selon la revendication 5, **caractérisé en ce que** les pieds (7) supports sont disposés autour de la paroi (3) extérieure et **en ce qu'**un enroulement filamentaire est réalisé autour de la paroi (3) extérieure munie des pieds (7) supports.

7. Réservoir selon l'une quelconque des revendications 1 à 6, **caractérisé en ce qu'**il comprend, dans le volume intérieur délimité par la paroi (2) interne, au moins une cloison (8) transversale à un axe longitudinal du réservoir (1), la au moins une cloison (8) étant ajourée pour à la fois autoriser un flot de liquide dans le réservoir (1) selon une direction parallèle à l'axe longitudinal et former un brise-flot.

8. Réservoir selon la revendication 7, **caractérisé en ce que** la au moins une cloison (8) transversale est constitué du même matériau que la première couche.

9. Réservoir selon la revendication 7 ou 8, **caractérisé en ce que** la au moins une cloison (8) transversale est fixée sur un tronçon (102) tubulaire formant une partie centrale de la paroi (3) du réservoir (1).

10. Réservoir selon l'une quelconque de revendication 7 à 9, **caractérisé en ce que** la au moins une cloison (8) transversale est montée serrée entre deux tronçons tubulaires (102) assemblés l'un à l'autre pour former une partie centrale de la paroi (3) du réservoir (1).

11. Réservoir selon la revendication 5 ou 10, **caractérisé en ce que** les deux extrémités de la partie centrale du réservoir sont refermées par des parois de fond (202) fixées aux extrémités de la partie centrale de la paroi (3) du réservoir (1).

12. Réservoir selon l'une quelconque des revendications 7 à 11, **caractérisé en ce que** la paroi (3) comporte au moins un élément de renfort mécanique disposé sur sa surface extérieure au niveau de l'emplacement de la au moins une cloison (8) transversale.

13. Réservoir selon la revendication 11, **caractérisé en ce qu'**un enroulement de fibre de renfort est enroulée sur la partie centrale (102) et les parois de fond (202) assemblés aux deux extrémités de la partie centrale.

14. Semi-remorque comprenant un réservoir selon l'une quelconque des revendications 1 à 13.

## Patentansprüche

1. Speicherbehälter für den Transport eines kryogenen Fluids, insbesondere verflüssigten Kohlendioxids, wobei der Behälter (1) einwandig mit mehrschichtiger Struktur ist, d. h. ohne doppelwandige Struktur und einen Hohlraum zwischen den beiden Wänden im Bereich des Wandzwischenraums, wobei die Wand ein Speichervolumen für das Fluid abgrenzt, wobei die Wand von der Innenseite des Behälters (1) zur Außenseite des Behälters (1) hin umfasst:
- eine erste dichte Metallschicht (13), die eines der Metalle: Aluminium, Stahl, Edelstahl umfasst,
- eine zweite Schicht (23), die eine Dicke aus laminiertem Material auf Basis von Kohlenstoff- und/oder Glasfasern umfasst,
- eine dritte Schicht (33), die eine Wärmedämmungsdicke umfasst,
- eine vierte Schicht, und
wobei die dritte Schicht (33) mindestens eines aus Folgendem umfasst: expandiertes Polystyrol (EPS), extrudiertes Polystyrol (PSX), Polyurethan (PUR), Mineralwolle, Tierwolle, Holzfasern, Hanffasern, Baumwolle, Leinen, Schafwolle, Entenfedern, Zellstoffwatte, expandierter Kork, Perlit, expandiertes Vermiculit, Schaumglas, mindestens eine Vakuumisolierplatte, wobei die mindestens eine Platte aus einem Aerogel besteht, das in eine vakuumversiegelte Folie eingewickelt ist, wobei das Aerogel vom Typ "nanostrukturierte Kieselsäure" sein kann, ein Polyurethanschaum, insbesondere ein Isolierschaum vom Typ Polyurethan, Balsaholz, eine Schicht mit einem Sandwichkern, **dadurch gekennzeichnet, dass**:
- die vierte Schicht eine Dicke aus laminiertem Material auf Basis von Kohlenstoff- und/oder Glasfasern umfasst, und dass
- die Schichten folgende Dicken haben: Die erste Schicht hat eine Dicke zwischen 0,1 mm und 6 mm, die zweite Schicht hat eine Dicke zwischen 5 und 40 mm, die dritte Schicht hat eine Dicke zwischen 20 und 200 mm, die vierte Schicht hat eine Dicke zwischen 2 und 20 mm.

2. Behälter nach Anspruch 1, **dadurch gekennzeichnet, dass** mindestens eine von: der zweiten Schicht (13) und der vierten Schicht (43) Kohlefasern oder Glasfasern umfasst, die mit einem Epoxid- oder Polyamidharz laminiert sind.

3. Behälter nach einem der Ansprüche 1 bis 2, **dadurch gekennzeichnet, dass** die erste Schicht (13) eine Dicke zwischen 0,5 mm und 5 mm aufweist, die zweite Schicht (23) eine Dicke zwischen zehn und dreißig Millimetern aufweist, die dritte Schicht (33) eine Dicke zwischen vierzig und einhundertfünfzig Millimetern aufweist, die vierte Schicht (43) eine Dicke zwischen vier und fünfzehn Millimetern aufweist.

4. Behälter nach einem der Ansprüche 1 bis 3, **dadurch gekennzeichnet, dass** die erste Schicht (13) eine Dicke zwischen einem und vier Millimetern aufweist, die zweite Schicht (23) eine Dicke zwischen fünfzehn und fünfundzwanzig Millimetern aufweist, die dritte Schicht (33) eine Dicke zwischen vierzig und einhundertfünfzig Millimetern aufweist, die vierte Schicht (43) eine Dicke zwischen vier und fünfzehn Millimetern aufweist.

5. Behälter nach einem der Ansprüche 1 bis 4, **dadurch gekennzeichnet, dass** der Behälter (1) eine im Allgemeinen zylindrische Form aufweist und eine Mehrzahl von Stützfüßen (7) umfasst, die sich über einen Teil des Umfangs des Behälters (1) erstrecken, um Elemente zum Halten und Fixieren des Behälters (1) in horizontaler Position zu bilden.

6. Behälter nach Anspruch 5, **dadurch gekennzeichnet, dass** die Stützfüße (7) um die Außenwand (3) herum angeordnet sind und dass eine Filamentwicklung um die mit den Stützfüßen (7) versehene Außenwand (3) herum durchgeführt wird.

7. Behälter nach einem der Ansprüche 1 bis 6, **dadurch gekennzeichnet, dass** er in dem durch die Innenwand (2) abgegrenzten Innenvolumen mindestens eine Trennwand (8) quer zu einer Längsachse des Behälters (1) umfasst, wobei die mindestens eine Trennwand (8) durchbrochen ist, um gleichermaßen einen Flüssigkeitsstrom in den Behälter (1) in einer Richtung parallel zur Längsachse zu ermöglichen und eine Schwallwand zu bilden.

8. Behälter nach Anspruch 7, **dadurch gekennzeichnet, dass** die mindestens eine Quertrennwand (8) aus dem gleichen Material wie die erste Schicht besteht.

9. Behälter nach Anspruch 7 oder 8, **dadurch gekennzeichnet, dass** die mindestens eine Quertrennwand (8) auf einem rohrförmigen Abschnitt (102) befestigt ist, der einen zentralen Teil der Wand (3) des Behälters (1) bildet.

10. Behälter nach einem der Ansprüche 7 bis 9, **dadurch gekennzeichnet, dass** die mindestens eine Quertrennwand (8) eingeklemmt zwischen zwei miteinander verbundenen rohrförmigen Abschnitten (102) montiert ist, um einen zentralen Teil der Wand (3) des Behälters (1) zu bilden.

11. Behälter nach Anspruch 5 oder 10, **dadurch gekennzeichnet, dass** die beiden Enden des zentralen Teils des Behälters durch Rückwände (202) verschlossen sind, die an den Enden des zentralen Teils der Wand (3) des Behälters (1) befestigt sind.

12. Behälter nach einem der Ansprüche 7 bis 11, **dadurch gekennzeichnet, dass** die Wand (3) mindestens ein mechanisches Verstärkungselement aufweist, das auf ihrer Außenfläche im Bereich der mindestens einen Quertrennwand (8) angeordnet ist.

13. Behälter nach Anspruch 11, **dadurch gekennzeichnet, dass** um den zentralen Teil (102) und um die Rückwände (202), die an den beiden Enden des zentralen Teils montiert sind, eine Wicklung aus Verstärkungsfasern gewickelt ist.

14. Sattelanhänger mit einem Behälter nach einem der Ansprüche 1 bis 13.

## Claims

1. Storage tank for transporting a cryogenic fluid, in particular liquefied carbon dioxide, the tank (1) being a multilayer structure single wall, i.e. without a double wall structure and a gap between the two walls at the level of the inter-wall, the wall delimiting a storage volume for the fluid, said wall comprising the inside of the tank (1) towards the outside of the tank (1):
- a first metal, sealed layer (13), in particular comprising one from among: aluminium, steel, stainless steel,
- a second layer (23) comprising a carbon fibre- and/or glass fibre-based stratified material thickness,
- a third layer (33) comprising a thermal insulation thickness,
- a fourth layer, and in which the third layer (33) comprises at least one from among: expanded polystyrene (EPS), extruded polystyrene (XPS), polyurethane (PUR), mineral wool, animal wool, wood fibres, hemp fibres, cotton wool, linen, sheep's wool, duck feathers, cellulose wadding, expanded cork, perlite, expanded vermiculite, cellular glass, at least one vacuumed insulating panel, the at least one panel being constituted of an aerogel encased in a vacuumed sealed film, the aerogel could be of the "nanostructured silica" type, a polyurethane foam, in particular an insulating foam of the polyurethane type, balsa wood, a layer comprising a sandwich core, **characterised in that**:
- the fourth layer comprises a carbon fibre- and/or glass fibre-based stratified material thickness, and **in that**
- the layers have the following thicknesses: the first layer has a thickness of between 0.1mm and 6mm, the second layer has a thickness of between 5mm and 40mm, the third layer has a thickness of between 20mm and 200mm, the fourth layer has a thickness of between 2mm and 20mm.

2. Tank according to claim 1, **characterised in that**, at least one from among: the second layer (13) and the fourth layer (43), comprises stratified carbon fibres or glass fibres by means of an epoxy- or polyamide-type resin.

3. Tank according to any one of claims 1 to 2, **characterised in that** the first layer (13) has a thickness of between 0.5mm and 5mm, the second layer (23) has a thickness of between 10mm and 30mm, the third layer (33) has a thickness of between 40 and 45mm, the fourth layer (43) has a thickness of between 4mm and 15mm.

4. Tank according to any one of claims 1 to 3, **characterised in that** the first layer (13) has a thickness of between 1mm and 4mm, the second layer (23) has a thickness of between 15mm and 25mm, the third layer (33) has a thickness of between 40 and 150mm, the fourth layer (43) has a thickness of between 4mm and 15mm.

5. Tank according to any one of claims 1 to 4, **characterised in that** the tank (1) has a general cylindrical shape and comprises a plurality of supporting feet (7) which extend over a portion of the circumference of the tank (1) to form elements for holding and fixing the tank (1) in the horizontal position.

6. Tank according to claim 5, **characterised in that** the supporting feet (7) are arranged around the outer wall (3) and **in that** a filament winding is achieved around the outer wall (3) provided with supporting feet (7).

7. Tank according to any one of claims 1 to 6, **characterised in that** it comprises, in the inner volume delimited by the inner wall (2), at least one partition (8) transversal to a longitudinal axis of the tank (1), the at least one partition (8) being perforated to both enable a liquid flow in the tank (1) along a direction parallel to the longitudinal axis and form a baffle.

8. Tank according to claim 7, **characterised in that** the at least one transversal partition (8) is constituted of one same material as the first layer.

9. Tank according to claim 7 or 8, **characterised in that** the at least one transversal partition (8) is fixed onto a tubular section (102) forming a central portion of the wall (3) of the tank (1).

10. Tank according to any one of claims 7 to 9, **characterised in that** the at least one transversal partition (8) is mounted clamped between two tubular sections (102) assembled against one another to form a central portion of the wall (3) of the tank (1).

11. Tank according to claim 5 or 10, **characterised in that** the two ends of the central portion of the tank are closed by bottom walls (202) fixed to the ends of the central portion of the wall (3) of the tank (1).

12. Tank according to any one of claims 7 to 11, **characterised in that** the wall (3) comprises at least one mechanical reinforcing element arranged on the outer surface thereof at the level of the placement of the at least one transversal partition (8).

13. Tank according to claim 11, **characterised in that** a reinforcing fibre winding is wound over the central portion (102) and the bottom walls (202) assembled at the two ends of the central portion.

14. Trailer comprising a tank according to any one of claims 1 to 13.
